# EUROPÄISCHE PATENTSCHRIFT

(11) **EP 4 551 835 B1**
(45) Veröffentlichungstag und Bekanntmachung des Hinweises auf die Patenterteilung: **22.04.2026**
(21) Anmeldenummer: 23737945.8
(22) Anmeldetag: 29.06.2023
(51) Int. Cl.: F16D 1/10, F16D 1/112

(54) **WELLE-NABE-BAUGRUPPE**
SHAFT-HUB ASSEMBLY
ENSEMBLE ARBRE-MOYEU

(30) Priorität: 06.07.2022 DE 102022116887
(43) Veröffentlichungstag der Anmeldung: 14.05.2025
(73) Patentinhaber: Stabilus GmbH, 56070 Koblenz (DE)
(72) Erfinder: SCHNEIDER, Sven, 56564 Neuwied (DE); SCHWAB, Wilhelm, 56073 Koblenz (DE)
(74) Vertreter: Höer, Daniela
(86) Internationale Anmeldenummer: PCT/EP2023/067865
(87) Internationale Veröffentlichungsnummer: WO 2024/008553

(56) Entgegenhaltungen:
- DE-A1- 102011 053 334
- DE-A1- 102015 113 174
- DE-A1- 102020 111 679
- US-A1- 2002 197 104
- US-A1- 2003 159 536
- US-A1- 2005 254 890
- US-B1- 6 381 933

## Beschreibung

Die vorliegende Erfindung betrifft eine Welle-Nabe-Baugruppe, umfassend eine Nabe, welche mit einer axial verlaufenden Öffnung versehen ist, und eine Welle, welche in die Öffnung der Nabe eingesetzt ist, wobei die Welle wenigstens einen ersten axialen Abschnitt, in welchem die Welle im Wesentlichen einen konstanten Querschnitt aufweist und einen zweiten axialen Abschnitt umfasst, welcher von dem ersten axialen Abschnitt aus im Wesentlichen von einem ersten Querschnitt, welcher dem Querschnitt des ersten axialen Abschnitts entspricht, zu einem zweiten, größeren Querschnitt auseinanderläuft. Ferner betrifft die vorliegende Erfindung ein Verfahren zum Herstellen einer derartigen Welle-Nabe-Baugruppe.

Bei Welle-Nabe-Baugruppen der genannten Art wird eine spielfreie Verbindung zur Übertragung von radialen Drehmomenten und axialen Kräften benötigt. Hierbei zeigt sich jedoch, dass aus dem Stand der Technik bekannte Nietverbindungen meist den Nachteil aufweisen, dass mit diesen keine spielfreie Übertragung von Drehmomenten möglich ist. In diesem Zusammenhang wird üblicherweise ebenfalls verlangt, dass die Verbindung zwischen der Welle und der Nabe nicht nur statischen Kräften standhalten muss, sondern dass ihre mechanische Integrität insbesondere auch bei dynamischen axialen und radialen Belastungen sichergestellt sein muss. Sollte die entsprechende Verbindung nämlich nicht spielfrei sein, ungeachtet ob in radialer oder axialer Richtung, so ist eine unerwünschte Geräuschentwicklung zu beobachten. Eine solche ist jedoch für Anwender einer derartigen Baugruppe nicht akzeptabel und muss in jedem Fall verhindert werden.

Ferner ist aus dem Stand der Technik bekannt, in derartigen Baugruppen eine Welle aus einem härteren Werkstoff vorzusehen, die mehrere radial hervorstehende achsparallele Rippen aufweist. Diese Welle wird in die axial verlaufende Öffnung der Nabe eingepresst, deren Durchmesser im Wesentlichen dem Durchmesser der Welle ohne Rippen entspricht. Da die Nabe hierbei aus einem weicheren Werkstoff als die Welle besteht, wird sich diese bei einem radialen Einschieben in die Wandung der Öffnung der Nabe mit den Rippen einschneiden. Hierdurch soll eine spielfreie Drehmomentübertragung zwischen Welle und Nabe erzielt werden.

Es hat sich jedoch in derartigen Ausgestaltungen von Welle-Nabe-Baugruppen gezeigt, dass die spielfreie Verbindung zwischen Welle und Nabe lediglich an den Rippen besteht, da zwischen der zylindrischen Mantelfläche der Welle und der zylindrischen Wandung der Öffnung der Nabe aufgrund von Herstellungstoleranzen ebenfalls ein Spiel vorhanden ist.

Ferner sind Ansätze verfolgt worden, eine formschlüssige Verbindung mit einer axialen Sicherung durch eine Nietverbindung zu kombinieren, wodurch in einem gewissen Umfang Drehmomente und axiale Kräfte übertragen werden können. Dieses Prinzip wurde im Stand der Technik durch eine Kerbverzahnung und eine flache Nietung realisiert, welche in der gewünschten Weise zusammenwirken sollen. Ferner wurde ebenfalls der Ansatz verfolgt, eine formschlüssige Verbindung zwischen Welle und Nabe mithilfe einer Fase zu erzielen.

Hierbei zeigt sich jedoch, dass keine der aus dem Stand der Technik bekannten Lösungen dazu geeignet ist, Drehmomente und axiale Kräfte vollständig spielfrei zu übertragen. Wie bereits oben angesprochen, ist eine rein axiale Nietverbindung nicht in der Lage, Drehmomente zu übertragen, während eine Kombination aus einer formschlüssigen Verbindung mit einer axialen Sicherung durch eine Nietverbindung zwar grundsätzlich in der Lage ist, Drehmomente zu übertragen und axiale Kräfte aufzufangen, allerdings ist eine derartige Verbindung nicht in dem geforderten Maße spielfrei. Um der folglich zu beobachtenden Geräuschentwicklung entgegenzuwirken, muss dementsprechend in derartigen Baugruppen ferner eine Klebeverbindung hergestellt werden, was jedoch einen erhöhten Aufwand bei der Herstellung davon bedeutet.

Der zuletzt genannte Ansatz mit einer formschlüssigen Verbindung zwischen Welle und Nabe mithilfe einer Fase ermöglicht zwar eine spielfreie Verbindung ohne eine zusätzliche Nutzung von Klebstoffen, das spielfrei übertragbare Dreh-moment reicht jedoch für gewisse Anwendungen mit höheren Belastungsanforderungen nicht aus.

Als weiterer Stand der Technik offenbart die US 6,381,933 B1 eine Wellenkupplung zum Verbinden zweier separater Antriebswellen in einer Futtererntemaschine. Jedes Wellenende weist eine konische Verzahnung auf. Die beiden Wellenenden werden von entgegengesetzten Seiten in eine innenverzahnte Kupplungshülse eingeführt und mittels Haltescheiben und einer durchgehenden Spannschraube axial gegeneinander verspannt. Die Verbindung dient der Verlängerung einer Antriebslinie und nicht der Befestigung einer Welle in einer Nabe.

Aus der US 2002/0197104 A1 ist eine Polygon-Verbindung zwischen einer Welle und einer Nabe bekannt. Hierbei weist das Ende der Welle einen polygonförmigen Querschnitt auf, welcher in eine komplementär geformte Aussparung in der Nabe eingeführt wird. Die axiale Sicherung der Verbindung erfolgt anschließend durch das Umformen einer an der Nabe vorgesehenen Lippe, welche über einen Vorsprung an der Welle greift und so die beiden Bauteile axial verriegelt.

Die DE 10 2015 113 174 A1 beschreibt ein Verbindungselement für eine Welle-Nabe-Verbindung, bei dem ein separates, rohrförmiges Element (ein Rohling) in einen Hohlraum zwischen der Welle und der Nabe eingepresst wird. Während des Fügevorgangs wird dieser Rohling plastisch verformt und füllt den Hohlraum aus, wodurch eine formschlüssige Verbindung zwischen Welle und Nabe hergestellt wird. Die Verbindung wird somit durch ein drittes Bauteil und nicht durch direktes Ineinanderpressen von Welle und Nabe erzeugt.

Die DE 10 2020 111 679 A1 betrifft eine Welle mit Passungsstrukturen, wie beispielsweise Rändeln, für eine Presspassung. Um die radialen Spannungen im Nabenmaterial beim Fügen zu reduzieren, sind die Passungsstrukturen so gestaltet, dass sich der Abstand ihrer radial inneren Ränder zum axialen Ende der Welle hin verjüngt. Dadurch wird beim Einpressen verdrängtes Nabenmaterial in die entstehenden Zwischenräume geleitet, was die radiale Belastung der Nabe verringert.

Die US 2005/0254890 A1 zeigt eine Welle-Nabe-Verbindung, bei der die Welle drei axiale Abschnitte aufweist: einen mittleren verzahnten Abschnitt sowie zwei beidseits davon angeordnete, glatte Zentrierabschnitte. Die Nabe weist eine entsprechend gestufte Bohrung auf. Beim Fügen schneidet der mittlere verzahnte Abschnitt der Welle, dessen Durchmesser größer ist als der zugehörige Bohrungsdurchmesser, ein Gegenprofil in das Material der Nabe. Die beiden äußeren Abschnitte dienen lediglich der Zentrierung und bilden eine Gleit- oder Übergangspassung. Es wird also nicht die gesamte funktionale Länge der Welle profiliert und in die Nabe gepresst.

Es ist demzufolge die Aufgabe der vorliegenden Erfindung, eine Welle-Nabe-Baugruppe der oben genannten Gattung bereitzustellen, welche eine spielfreie Verbindung zur Übertragung von radialem Drehmoment und axialer Kraft umfasst, welche einerseits günstig herzustellen ist und ohne eine zusätzliche Verklebung auskommt und andererseits in der Lage ist, auch hohe Drehmomente ohne Geräuschentwicklung zu übertragen.

Hierzu umfasst die Welle der erfindungsgemäßen Welle-Nabe-Baugruppe wie angesprochen wenigstens einen ersten axialen Abschnitt, in welchem die Welle im Wesentlichen einen konstanten Querschnitt aufweist, und einen zweiten axialen Abschnitt, welcher von dem ersten axialen Abschnitt aus im Wesentlichen von einem ersten Querschnitt, welcher dem Querschnitt des ersten axialen Abschnitts entspricht, zu einem zweiten, größeren Querschnitt auseinanderläuft, wobei erfindungsgemäß die Welle ferner einen sich an den zweiten axialen Abschnitt anschließenden dritten axialen Abschnitt umfasst, welcher einen im Wesentlichen konstanten dritten Querschnitt aufweist, welcher gleich oder größer als der zweite Querschnitt ist, und wobei der dritte axiale Abschnitt einen axialen Endabschnitt der Welle bildet und die ersten bis dritten axialen Abschnitte an ihrer Außenseite ein jeweiliges Zahn- oder Wellenprofil aufweisen.

Dementsprechend wird in der erfindungsgemäßen Welle-Nabe-Baugruppe verglichen mit den oben beschriebenen Lösungen aus dem Stand der Technik eine Erhöhung der Kontaktfläche der formschlüssigen Verbindung zwischen Welle und Nabe erzielt, welche das Übertragen höherer Momente erlaubt. Insbesondere wird dies durch eine zusätzliche radiale Abstützung der Kräfte und Momente realisiert.

Hierbei kann insbesondere der dritte axiale Abschnitt der Welle in das Material der Nabe eingepresst sein. Auf diese Weise wird an den Außenwänden der Welle eine zusätzliche formschlüssige und kraftschlüssige Verbindung hergestellt.

Zu diesem Zweck kann in der erfindungsgemäßen Baugruppe die Welle aus einem härteren Material als die Nabe gebildet sein, um das Einpressen der Welle in das Material der Nabe zu vereinfachen. Insbesondere kann die Welle aus einem Metallmaterial gebildet sein und die Nabe aus einem verglichen hiermit weicheren Metallmaterial oder einem Kunststoff gebildet sein.

Ferner kann erfindungsgemäß zwischen dem zweiten axialen Abschnitt und dem dritten axialen Abschnitt der Welle eine radiale Stufe vorgesehen sein, sodass der konstante dritte Querschnitt des dritten axialen Abschnitts größer ist als der zweite Querschnitt, auf welchen sich die Welle in dem zweiten axialen Abschnitt ausgehend von dem ersten axialen Abschnitt verbreitert. Hierdurch wird eine zusätzliche axiale Abstützung im Bereich der Stufe bewerkstelligt und die Verbindung von Welle und Nabe wird weiter verbessert.

Weiterhin kann in der erfindungsgemäßen Welle-Nabe-Baugruppe der zweite axiale Abschnitt der Welle im Wesentlichen konisch von dem ersten axialen Abschnitt zu dem dritten axialen Abschnitt auseinanderlaufen. Alternativ sind hier jedoch auch andere Verläufe des zweiten axialen Abschnitts denkbar, beispielsweise eine bogenförmige Zunahme des Querschnitts der Welle in diesem Bereich.

Des Weiteren kann die Welle in einem radial mittleren Teil des dritten axialen Abschnitts mit einer Sackloch-Bohrung versehen sein, welche von dem axialen Ende der Welle ausgeht.

Außerdem kann an dem gegenüberliegenden Ende die Welle einen axialen Anschlag aufweisen und bis zu diesem in die Nabe eingesetzt sein, wodurch auch in dieser axialen Richtung eine Verbesserung der Verbindung zwischen Welle und Nabe erzielt wird.

Gemäß einem zweiten Aspekt betrifft die vorliegende Erfindung ein Verfahren zum Herstellen einer derartigen Welle-Nabe-Baugruppe, umfassend die Schritte eines Bereitstellens einer Nabe, welche mit einer axial verlaufenden Öffnung versehen ist, wobei die Öffnung einen ersten axialen Abschnitt mit einem im Wesentlichen konstanten Querschnitt, einen zweiten axialen Abschnitt, welcher von dem ersten axialen Abschnitt im Wesentlichen von einem ersten Querschnitt, welcher dem Querschnitt des ersten axialen Abschnitts entspricht, zu einem zweiten, größeren Querschnitt auseinanderläuft, und einen dritten axialen Abschnitt mit einem im Wesentlichen konstanten Querschnitt umfasst, eines Bereitstellens einer Welle mit einem im Wesentlichen konstanten ersten Querschnitt, welcher dem Querschnitt des ersten axialen Abschnitts der Öffnung entspricht, wobei die Welle an ihrer Außenseite ein Zahn- oder Wellenprofil aufweist und die Öffnung der Nabe wenigstens in ihrem ersten axialen Abschnitt ein komplementäres Profil aufweist, und eines Verformens der Welle derart, dass ein zweiter Abschnitt, welcher dem zweiten axialen Abschnitt der Öffnung entspricht, und ein dritter Abschnitt gebildet werden, wobei der dritte Abschnitt der Welle einen größeren Querschnitt als der dritte axiale Querschnitt der Nabe aufweist, indem der dritte axiale Abschnitt der Welle in das Material der Nabe eingepresst wird. Durch dieses Verfahren kann in einer einfachen und effizienten Weise eine erfindungsgemäße Welle-Nabe-Baugruppe mit den oben angesprochenen Vorteilen hergestellt werden.

Erfindungsgemäß kann hierbei vor dem Verbinden der beiden Komponenten lediglich der erste axiale Abschnitt der Öffnung der Nabe das komplementäre Profil aufweisen, während der zweite axiale Abschnitt und der dritte axiale Abschnitt frei von einem solchen Profil sind.

Weiterhin kann hierbei der Schritt des Verformens durch eine axiale Stanz- oder Pressbeaufschlagung durchgeführt werden.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Figuren 1a und 1b: eine Nabe einer erfindungsgemäßen Welle-Nabe-Baugruppe vor und nach einem Verbinden mit der entsprechenden Welle;
- Figuren 2a bis 2c: die Welle der erfindungsgemäßen Welle-Nabe-Baugruppe vor dem Verbinden mit der Nabe und nach dem Verbinden der Nabe in zwei Ansichten; und
- Figuren 3a bis 3c: die Welle-Nabe-Baugruppe während des Verbindens und nach dem Verbinden von Welle und Nabe in zwei Ansichten.

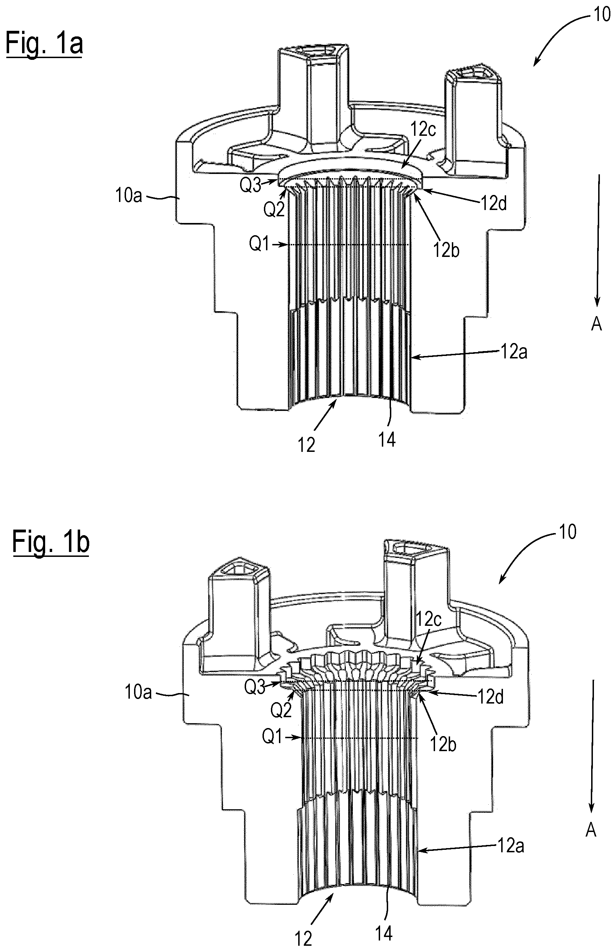

In den Figuren 1a und 1b ist zunächst einmal eine Nabe einer erfindungsgemäßen Welle-Nabe-Baugruppe mit dem Bezugszeichen 10 bezeichnet und in zwei Zuständen gezeigt, nämlich vor einem Verbinden mit einer entsprechenden Welle sowie danach, wobei in der Darstellung aus Figur 1b zunächst einmal aus Gründen der Übersichtlichkeit auf eine Darstellung der Welle verzichtet worden ist.

Hierbei kann in der gezeigten Ausführungsform die Nabe 10 beispielsweise ein Kupplungsgehäuse eines Spindeltriebs darstellen. Die Nabe 10 kann hierbei insbesondere aus einem relativ weichen Metallmaterial oder einem Kunststoff hergestellt sein und umfasst eine in axialer Richtung A verlaufende Öffnung 12, welche durch den gesamten Körper 10a der Nabe 10 hindurch verläuft. Weiterhin ist in Figur 1a zu erkennen, dass die Öffnung 12 einen ersten axialen Abschnitt 12a mit einem im Wesentlichen konstanten Querschnitt Q1 umfasst, wobei die Wandung der Öffnungen im ersten axialen Abschnitt 12a ein Zahn- oder Wellenprofil 14 aufweist.

In axialer Richtung hieran anschließend umfasst die Öffnung 12 ferner einen zweiten axialen Abschnitt 12b, welcher von dem ersten axialen Abschnitt 12a von einem ersten Querschnitt Q1, welcher dem Querschnitt Q1 des ersten axialen Abschnitts 12a entspricht, zu einem zweiten, größeren Querschnitt Q2 auseinanderläuft. Hieran schließt sich ein dritter axialer Abschnitt 12c mit einem im Wesentlichen konstanten Querschnitt Q3 an, welcher wiederum größer als der zweite Querschnitt Q2 ist, sodass zwischen dem zweiten axialen Abschnitt 12b und dem dritten axialen Abschnitt 12c eine Stufe 12d gebildet ist. Hierbei ist zu erkennen, dass der zweite und dritte Abschnitt 12b und 12c sowie die Stufe 12d jeweils frei von dem Zahn- oder Wellenprofil 14 sind, welches in dem ersten Abschnitt 12a zu finden ist.

Unter Bezugnahme auf Figur 1b ist nun zu erkennen, dass nach dem Verbinden der Nabe 10 mit der in den folgenden Figuren gezeigten Welle durch ein Einpressen eines entsprechenden Abschnitts der Welle in das Material der Nabe 10 auch in dem zweiten und dritten Abschnitt 12b und 12c sowie der Stufe 12d ein entsprechendes Zahn- oder Wellenprofil 14 gebildet worden ist, wodurch eine kraft- und formschlüssige Verbindung zwischen den beiden Komponenten hergestellt worden ist.

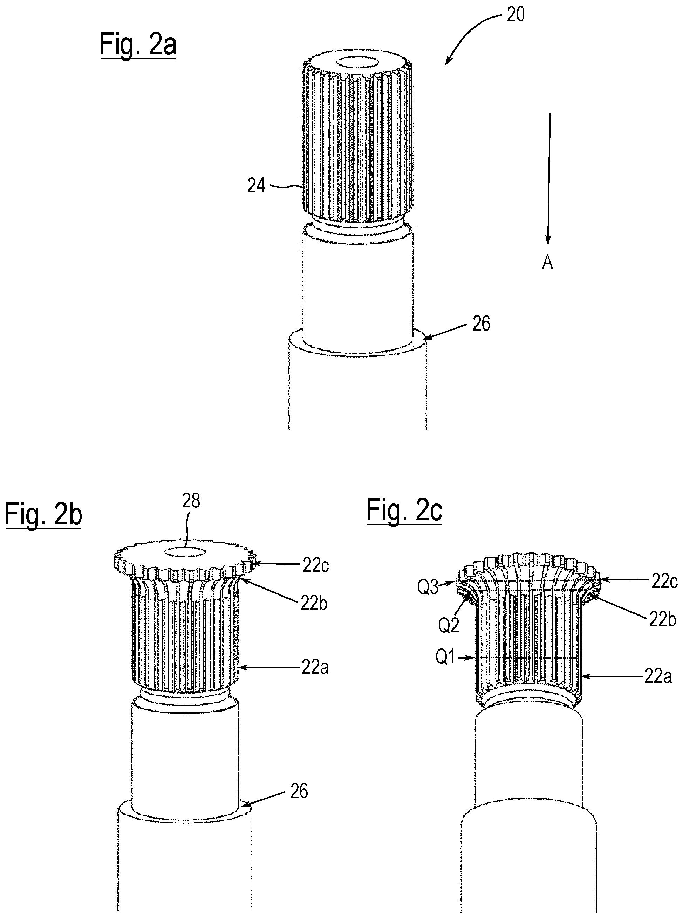

In den Figuren 2a bis 2c ist nun die entsprechende Welle 20 der erfindungsgemäßen Welle-Nabe-Baugruppe gezeigt und allgemein mit dem Bezugszeichen 20 bezeichnet. In dem noch nicht mit der Nabe 10 aus den Figuren 1a und 1b verbundene Zustand aus der Figur 2a ist die Welle 20 in ihrem axial oberen Bereich noch zylinderförmig mit einem im Wesentlichen konstanten Querschnitt Q1 geformt, wobei sie lediglich an ihrer Außenseite ein zu der Öffnung der Nabe 10 komplementäres Zahn- oder Wellenprofil 24 aufweist. Ferner ist im axial unteren Bereich der Welle 20 ein axialer Anschlag 26 vorgesehen, welcher das Einführen der Welle 20 in die Öffnung 12 der Nabe 10 in dieser Richtung begrenzt. An ihrer axialen Oberseite weist die Welle 20 in einem radial mittleren Teil ferner eine Sackloch-Bohrung 28 auf.

In den Figuren 2b und 2c ist nunmehr die Welle 20 in einem Zustand gezeigt, in welchem sie mit der Nabe 10 aus Figur 1a und 1b verbunden ist, wobei jedoch zunächst einmal auf eine Darstellung der Nabe 10 aus Gründen der Sichtbarkeit verzichtet worden ist. Hierbei zeigt sich, dass nach einer entsprechenden Verformung die Welle 20 nunmehr einen ersten axialen Abschnitt 22a umfasst, in welchem die Welle 20 den ersten konstanten Querschnitt Q1 aufweist, welcher dem Querschnitt Q1 der Öffnung 12 der Nabe 10 in deren erstem Abschnitt 12a entspricht. Hieran schließt sich in axialer Richtung ein zweiter axialer Abschnitt 22b an, welcher in axialer Richtung von dem ersten Querschnitt Q1 zu einem zweiten, größeren Querschnitt Q2 auseinanderläuft, während sich ferner an diesen zweiten axialen Abschnitt 22b ein dritter axialer Abschnitt 22c anschließt, welcher einen im Wesentlichen konstanten dritten Querschnitt Q3 aufweist, welcher größer als der zweite Querschnitt Q2 ist.

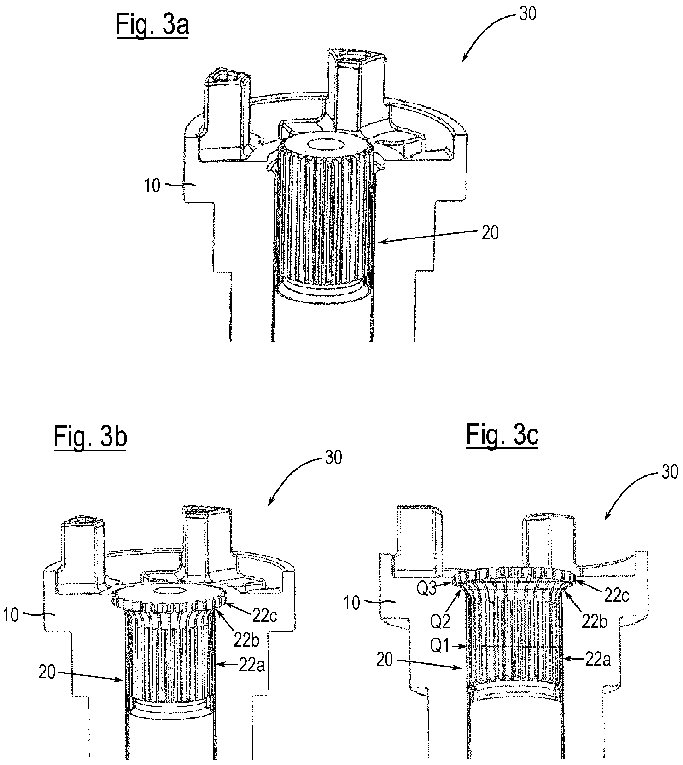

In den Figuren 3a bis 3c ist nun zuletzt die Welle-Nabe-Baugruppe 30 in einem Zustand gezeigt, in welchem die Welle 20 bereits in die Öffnung 12 der Nabe 10 eingesetzt, jedoch noch nicht verformt worden ist. Wie bereits angesprochen, kann in diesem Zustand der in Figur 3a nicht gezeigte Anschlag 26 das Einführen der Welle 20 in die Öffnung 12 der Nabe 10 in axialer Richtung A begrenzen.

Weiterhin ist in den Figuren 3b und 3c in zwei Ansichten die Welle-Nabe-Baugruppe 30 in ihrem letztlich verbundenen Zustand gezeigt, wobei zu erkennen ist, dass zwischen der Nabe 10 und der Welle 20 eine form- und kraftschlüssige Verbindung durch das Zusammenwirken der einzelnen axialen Abschnitte der beiden Komponenten sowie insbesondere das Einpressen des dritten axialen Abschnitts 22c der Welle 20 in das Material der Nabe 10 im Bereich ihres dritten Abschnitts 12c sowie das axiale Anliegen an der Stufe 12d erzielt worden ist.

## Patentansprüche

1. Welle-Nabe-Baugruppe (30), umfassend:
- eine Nabe (10), welche mit einer axial verlaufenden Öffnung (12) versehen ist, und
- eine Welle (20), welche in die Öffnung (12) der Nabe (10) eingesetzt ist,
wobei die Welle (20) wenigstens die folgenden Abschnitte umfasst:
- einen ersten axialen Abschnitt (22a), in welchem die Welle (20) im Wesentlichen einen konstanten Querschnitt (Q1) aufweist; und
- einen zweiten axialen Abschnitt (22b), welcher von dem ersten axialen Abschnitt (22a) aus im Wesentlichen von einem ersten Querschnitt (Q1), welcher dem Querschnitt (Q1) des ersten axialen Abschnitts (22a) entspricht, zu einem zweiten, größeren Querschnitt (Q2) auseinanderläuft;
wobei die Welle (20) ferner einen sich an den zweiten axialen Abschnitt (22b) anschließenden dritten axialen Abschnitt (22c) umfasst, welcher einen im Wesentlichen konstanten dritten Querschnitt (Q3) aufweist, welcher gleich oder größer als der zweite Querschnitt (Q2) ist, und welcher mit der Nabe (10) eine formschlüssige und kraftschlüssige Verbindung herstellt, und
wobei der dritte axiale Abschnitt (22c) einen axialen Endabschnitt der Welle (20) bildet und **dadurch gekennzeichnet, dass** die ersten bis dritten axialen Abschnitte (22a - 22c) an ihrer Außenseite ein jeweiliges Zahn- oder Wellenprofil (24) aufweisen.

2. Welle-Nabe-Baugruppe (30) nach Anspruch 1,
wobei der dritte axiale Abschnitt (22c) der Welle (20) in das Material der Nabe (10) eingepresst ist.

3. Welle-Nabe-Baugruppe (30) nach einem der vorhergehenden Ansprüche,
wobei die Welle (20) aus einem härteren Material als die Nabe (10) gebildet ist.

4. Welle-Nabe-Baugruppe (30) nach Anspruch 3,
wobei die Welle (20) aus einem Metallmaterial gebildet ist und die Nabe (10) aus einem weicheren Metallmaterial oder einem Kunststoff gebildet ist.

5. Welle-Nabe-Baugruppe (30) nach einem der vorhergehenden Ansprüche, wobei zwischen dem zweiten axialen Abschnitt (22b) und dem dritten axialen Abschnitt (22c) der Welle (20) eine radiale Stufe (22d) vorgesehen ist.

6. Welle-Nabe-Baugruppe (30) nach einem der vorhergehenden Ansprüche, wobei der zweite axiale Abschnitt (22b) im Wesentlichen konisch von dem ersten axialen Abschnitt (22a) zu dem dritten axialen Abschnitt (22c) auseinanderläuft.

7. Welle-Nabe-Baugruppe (30) nach einem der vorhergehenden Ansprüche, wobei die Welle (20) in einem radial mittleren Teil des dritten axialen Abschnitts mit einer Sackloch-Bohrung (28) versehen ist.

8. Welle-Nabe-Baugruppe (30) nach einem der vorhergehenden Ansprüche, wobei die Welle (20) einen axialen Anschlag (26) aufweist und bis zu diesem in die Nabe (20) eingesetzt ist.

9. Verfahren zum Herstellen einer Welle-Nabe-Baugruppe (30) nach einem der vorhergehenden Ansprüche, umfassend die folgenden Schritte:
- Bereitstellen einer Nabe (10), welche mit einer axial verlaufenden Öffnung (12) versehen ist, wobei die Öffnung (12) umfasst:
∘ einen ersten axialen Abschnitt (12a) mit einem im Wesentlichen konstanten Querschnitt (Q1),
∘ einen zweiten axialen Abschnitt (12b), welcher von dem ersten axialen Abschnitt (12a) im Wesentlichen von einem ersten Querschnitt (Q1), welcher dem Querschnitt (Q1) des ersten axialen Abschnitts (12a) entspricht, zu einem zweiten, größeren Querschnitt (Q2) auseinanderläuft; und
o einen dritten axialen Abschnitt (12c) mit einem im Wesentlichen konstanten Querschnitt (Q3);
- Bereitstellen einer Welle (20) mit einem im Wesentlichen konstanten ersten Querschnitt (Q1), welcher dem Querschnitt (Q1) des ersten axialen Abschnitts (12a) der Öffnung (12) entspricht;
wobei die Welle (20) an ihrer Außenseite ein Zahn- oder Wellenprofil (24) aufweist und die Öffnung (12) der Nabe (10) wenigstens in ihrem ersten axialen Abschnitt (12a) ein komplementäres Profil (14) aufweist; und
- Verformen der Welle (20) derart, dass ein zweiter Abschnitt (22b), welcher dem zweiten axialen Abschnitt (12b) der Öffnung (12) entspricht, und ein dritter Abschnitt (22c) gebildet werden, wobei der dritte Abschnitt (22c) der Welle (20) einen größeren Querschnitt (Q3) als der dritte axiale Querschnitt (Q3) der Nabe (10) aufweist, indem der dritte axiale Abschnitt (22c) der Welle (20) in das Material der Nabe (10) eingepresst wird.

10. Verfahren nach dem vorhergehenden Anspruch ,
wobei lediglich der erste axiale Abschnitt (12a) der Öffnung (12) der Nabe (10) bei der Bereitstellung davon das komplementäre Profil (14) aufweist, während der zweite axiale Abschnitt (12b) und der dritte axiale Abschnitt (12c) frei von einem solchen Profil sind.

11. Verfahren nach dem vorhergehenden Anspruch,
wobei der Schritt des Verformens durch eine axiale Stanz- oder Pressbeaufschlagung durchgeführt wird.

## Claims

1. A shaft-hub assembly (30) comprising:
- a hub (10) which is provided with an axially extending opening (12), and
- a shaft (20) which is inserted into the opening (12) of the hub (10),
wherein the shaft (20) comprises at least the following portions:
- a first axial portion (22a), in which the shaft (20) substantially has a constant cross section (Q1); and
- a second axial portion (22b) which expands, proceeding from the first axial portion (22a), substantially from a first cross section (Q1), which corresponds to the cross section (Q1) of the first axial portion (22a), to a second, larger cross section (Q2);
wherein the shaft (20) further comprises a third axial portion (22c) which adjoins the second axial portion (22b) and which has a substantially constant third cross section (Q3) which is the same as or larger than the second cross section (Q2) and which establishes a form-locking and frictional connection with the hub (10), and
wherein the third axial portion (22c) forms an axial end portion of the shaft (20), and **characterized in that** the first to third axial portions (22a - 22c) have, on the outside thereof, a relevant toothed or corrugated profile (24).

2. The shaft-hub assembly (30) according to claim 1,
wherein the third axial portion (22c) of the shaft (20) is pressed into the material of the hub (10).

3. The shaft-hub assembly (30) according to either of the preceding claims,
wherein the shaft (20) is made of a harder material than the hub (10).

4. The shaft-hub assembly (30) according to claim 3,
wherein the shaft (20) is formed from a metal material and the hub (10) is formed from a softer metal material or a plastics material.

5. The shaft-hub assembly (30) according to any of the preceding claims,
wherein a radial step (22d) is provided between the second axial portion (22b) and the third axial portion (22c) of the shaft (20).

6. The shaft-hub assembly (30) according to any of the preceding claims,
wherein the second axial portion (22b) expands substantially conically proceeding from the first axial portion (22a) to the third axial portion (22c).

7. The shaft-hub assembly (30) according to any of the preceding claims,
wherein the shaft (20) is provided with a blind hole (28) in a radially central part of the third axial portion.

8. The shaft-hub assembly (30) according to any of the preceding claims,
wherein the shaft (20) has an axial stop (26) and is inserted into the hub (20) up to this stop.

9. A method for producing a shaft-hub assembly (30) according to any of the preceding claims, comprising the steps of:
- providing a hub (10) which is provided with an axially extending opening (12), wherein the opening (12) comprises:
o a first axial portion (12a) having a substantially constant cross section (Q1),
o a second axial portion (12b) which expands, proceeding from the first axial portion (12a), substantially from a first cross section (Q1), which corresponds to the cross section (Q1) of the first axial portion (12a), to a second, larger cross section (Q2); and
∘ a third axial portion (12c) having a substantially constant cross section (Q3);
- providing a shaft (20) having a substantially constant first cross-section (Q1) which corresponds to the cross section (Q1) of the first axial portion (12a) of the opening (12);
wherein the shaft (20) has a toothed or corrugated profile (24) on the outside thereof and the opening (12) of the hub (10) has a complementary profile (14) at least in the first axial portion thereof (12a); and
- deforming the shaft (20) such that a second portion (22b), which corresponds to the second axial portion (12b) of the opening (12), and a third portion (22c) are formed, wherein the third portion (22c) of the shaft (20) has a larger cross section (Q3) than the third axial cross section (Q3) of the hub (10), by pressing the third axial portion (22c) of the shaft (20) into the material of the hub (10).

10. The method according to the preceding claim,
wherein only the first axial portion (12a) of the opening (12) of the hub (10) has the complementary profile (14) upon provision thereof, while the second axial portion (12b) and the third axial portion (12c) are free of such a profile.

11. The method according to the preceding claim,
wherein the step of deformation is carried out by an application of axial punching or pressing.

## Revendications

1. Ensemble arbre-moyeu (30), comprenant :
- un moyeu (10) qui est pourvu d'une ouverture (12) s'étendant axialement, et
- un arbre (20) qui est inséré dans l'ouverture (12) du moyeu (10),
dans lequel l'arbre (20) comprend au moins les sections suivantes :
- une première section axiale (22a) dans laquelle l'arbre (20) présente sensiblement une section transversale (Q1) constante ; et
- une deuxième section axiale (22b) qui diverge de la première section axiale (22a) sensiblement depuis une première section transversale (Q1), laquelle correspond à la section transversale (Q1) de la première section axiale (22a), jusqu'à une deuxième section transversale (Q2) plus grande ;
dans lequel l'arbre (20) comprend en outre une troisième section axiale (22c) se raccordant à la deuxième section axiale (22b) et présentant une troisième section transversale (Q3) sensiblement constante qui est égale ou supérieure à la deuxième section transversale (Q2) et qui établit avec le moyeu (10) une liaison par complémentarité de forme et à force, et
dans lequel la troisième section axiale (22c) forme une section d'extrémité axiale de l'arbre (20) et **caractérisé en ce que** les première à troisième sections axiales (22a - 22c) présentent un profil denté ou ondulé (24) respectif sur leur côté extérieur.

2. Ensemble arbre-moyeu (30) selon la revendication 1,
dans lequel la troisième section axiale (22c) de l'arbre (20) est pressée dans le matériau du moyeu (10).

3. Ensemble arbre-moyeu (30) selon l'une des revendications précédentes,
dans lequel l'arbre (20) est formé d'un matériau plus dur que celui du moyeu (10).

4. Ensemble arbre-moyeu (30) selon la revendication 3,
dans lequel l'arbre (20) est formé d'un matériau métallique et le moyeu (10) est formé d'un matériau métallique plus mou ou d'une matière plastique.

5. Ensemble arbre-moyeu (30) selon l'une des revendications précédentes,
dans lequel un gradin radial (22d) est prévu entre la deuxième section axiale (22b) et la troisième section axiale (22c) de l'arbre (20).

6. Ensemble arbre-moyeu (30) selon l'une des revendications précédentes,
dans lequel la deuxième section axiale (22b) diverge de manière sensiblement conique de la première section axiale (22a) jusqu'à la troisième section axiale (22c).

7. Ensemble arbre-moyeu (30) selon l'une des revendications précédentes,
dans lequel l'arbre (20) est pourvu d'un alésage borgne (28) dans une partie radialement centrale de la troisième section axiale.

8. Ensemble arbre-moyeu (30) selon l'une des revendications précédentes,
dans lequel l'arbre (20) présente une butée axiale (26) et est inséré dans le moyeu (20) jusqu'à celle-ci.

9. Procédé pour la fabrication d'un ensemble arbre-moyeu (30) selon l'une des revendications précédentes, comprenant les étapes suivantes :
- fourniture d'un moyeu (10) qui est pourvu d'une ouverture (12) s'étendant axialement, dans lequel l'ouverture (12) comprend :
∘ une première section axiale (12a) comportant une section transversale (Q1) sensiblement constante,
∘ une deuxième section axiale (12b) qui diverge de la première section axiale (12a) sensiblement depuis une première section transversale (Q1), laquelle correspond à la section transversale (Q1) de la première section axiale (12a), jusqu'à une deuxième section transversale (Q2) plus grande ; et
∘ une troisième section axiale (12c) comportant une section transversale (Q3) sensiblement constante ;
- fourniture d'un arbre (20) comportant une première section transversale (Q1) sensiblement constante, laquelle correspond à la section transversale (Q1) de la première section axiale (12a) de l'ouverture (12) ;
dans lequel l'arbre (20) présente un profil denté ou ondulé (24) sur son côté extérieur et l'ouverture (12) du moyeu (10) présente un profil complémentaire (14) au moins dans sa première section axiale (12a) ; et
- déformation de l'arbre (20) de telle sorte que sont formées une deuxième section (22b), laquelle correspond à la deuxième section axiale (12b) de l'ouverture (12), et une troisième section (22c), dans lequel la troisième section (22c) de l'arbre (20) présente une section transversale (Q3) supérieure à la troisième section transversale axiale (Q3) du moyeu (10), par le fait que la troisième section axiale (22c) de l'arbre (20) est pressée dans le matériau du moyeu (10).

10. Procédé selon la revendication précédente,
dans lequel seule la première section axiale (12a) de l'ouverture (12) du moyeu (10), lorsqu'elle est fournie, présente le profil complémentaire (14), tandis que la deuxième section axiale (12b) et la troisième section axiale (12c) sont exemptes d'un tel profil.

11. Procédé selon la revendication précédente,
dans lequel l'étape de déformation est réalisée par une application axiale de poinçonnage ou de compression.
